# EUROPEAN PATENT SPECIFICATION

(11) **EP 0 458 388 B1**
(45) Date of publication and mention of the grant of the patent: **03.08.1994**
(21) Application number: 91201121.0
(22) Date of filing: 09.05.1991
(51) Int. Cl.: G01J 5/00, G01J 5/52

(54) **Method and device for measuring temperature radiation using a pyrometer wherein compensation lamps are used**
Verfahren und Vorrichtung zur Messung der Temperaturstrahlung unter Verwendung von einem mit Kompensationslampen ausgerüstetem Pyrometer
Procédé et dispositif pour mesurer la radiation de température utilisant un pyromètre équipé de lampes compensatrices

(30) Priority: 23.05.1990 NL 9001200
(43) Date of publication of application: 27.11.1991
(73) Proprietor: INTERUNIVERSITAIR MICROELEKTRONICA CENTRUM VZW, 3030 Leuven-Heverlee (BE)
(72) Inventor: Vandenabeele, Peter Michel Noel, B-3020 Herent (BE); Maex, Karen Irma Jozef, B-3020 Herent (BE)
(74) Representative: Land, Addick Adrianus Gosling

(56) References cited:
- NL-A- 8 701 479
- US-A- 3 916 690
- US-A- 4 890 245

## Description

When measuring the temperature of a wafer of semiconductor material, using a pyrometer with which the radiation generated according to the expression of Stefan Boltzmann is measured, the so-called emissivity is of great importance. The emissivity of an object has a value < 1 because of reflection occurring between the interior of the object and the outside environment, the so-called reflectivity. In the case of semiconductor wafers, the emissivity is found in practice to possibly vary between values of 0.4 and 0.9.

This problem is adressed in US-A-4890245 wherein a method and apparatus is shown for detecting the temperature of a substrate, by measuring the intensity of infrared light from the substrate when it is irradiated by infrared light and also when it is not irradiated. The temperature is calculated from the transmissivity and emissivity of the substrate.

It is a disadvantage of this known method and apparatus that the temperature of the substrate can only be measured when the radiation is interrupted.

The present invention obviates the above problem; it provides a method for measuring the radiation originating from one side of a wafer of semiconductor material using a radiation thermometer or pyrometer, wherein the wafer is heated by heating means, characterized in that compensation radiation is projected onto the one side and/or the other side of the wafer to compensate for the reflectivity and/or the transparency of said wafer, and wherein the intensity of the compensation radiation is controlled subject to the amount of radiation measured by the pyrometer. Using the method according to the present invention a temperature measurement is therefore made of a wafer of semiconductor material which is independent of the emissivity of the object.

US-A-3916690 disclosed an apparatus for measuring the temperature at the surface of an object by infrared radiation therefrom using a variably heated compensating radiator and a rotable chopper wheel. The heat supply to the compensating radiator is varied in accordance with a infrared-detector signal in such sense as to reduce the signal to zero whereby the temperature of the compensating radiator then equals the temperature of the object.

NL-A-8701479 describes the continuous determination of an emission coefficient when radiation is measured which is reflected from a body, e.g. from moving metallic band.

Further the present invention provides an apparatus for treating a wafer of semiconductor material, comprising:
- a treatment chamber wherein the wafer is treated;
- heating means disposed in said treatment chamber and for heating said wafer -one or more pyrometers or radiation thermometers for measuring radiation coming from siad wafer, characterized in that said pyrometer is disposed into a wall of the treatment chamber and in that one or more compensation lamps are provided for projecting compensation radiation onto the wafer of semiconductor material, wherein the intensity of the compensation lamps is controlled subject to the measurement value of the pyrometer.

Further features, advantages and details will be elucidated in the light of a description of preferred embodiments thereof, with reference to the appended drawing, in which:

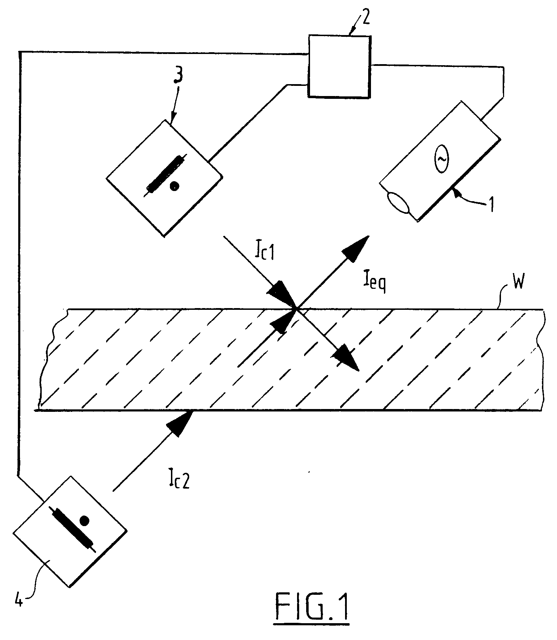

Fig. 1 shows a schematic view of a preferred method according to the present invention.

Fig. 2 shows a schematic view in perspective of a preferred embodiment of a device according to the present invention.

Fig. 3 shows a section along line III-III of fig. 2.

Fig. 4 shows a section along line IV-IV in fig. 2.

Fig. 5 is a schematic side view of a second preferred embodiment of the present invention; and

Fig. 6 shows a third preferred embodiment of the present invention.

A pyrometer 1 is directed at a wafer of semiconductor material W to determine the amount of radiation originating from the wafer and the temperature thereof. The measurement output of the pyrometer 1 is connected to a control member 2 which in turn is connected to both a first compensation radiation source 3 and a second compensation radiation source 4. The first compensation radiation source 3 projects compensation radiation with a wavelength suitable for the pyrometer 1 (λ= 0.9-5.0µm) onto the region of the wafer W at which the pyrometer 1 is directed. It is demonstrated that for the value of the compensation radiation I_{c1} where I_{c1} = I_{eq} is true, that is, the equilibrium radiation value I_{eq} measured by the pyrometer, this I_{eq} is the compensated radiation value for a wafer W with emissivity 1. From the expression of Stefan Boltzmann the temperature of the wafer W can now be derived from the measured I_{eq}. A compensation radiation source must be precisely calibrated so that the amount of compensation radiation I_{c} can be accurately controlled subject to the voltage to be supplied by the control member 2. The emissivity must be greater than 0.1-0.2 so that the formed control loop is sufficiently accurate and rapid.

The radiation I_{c2} originating from the second compensation radiation source 4 compensates in a corresponding manner for the transparency or permeability of the wafer of semiconductor material W, when I_{c2} = I_{eq}.

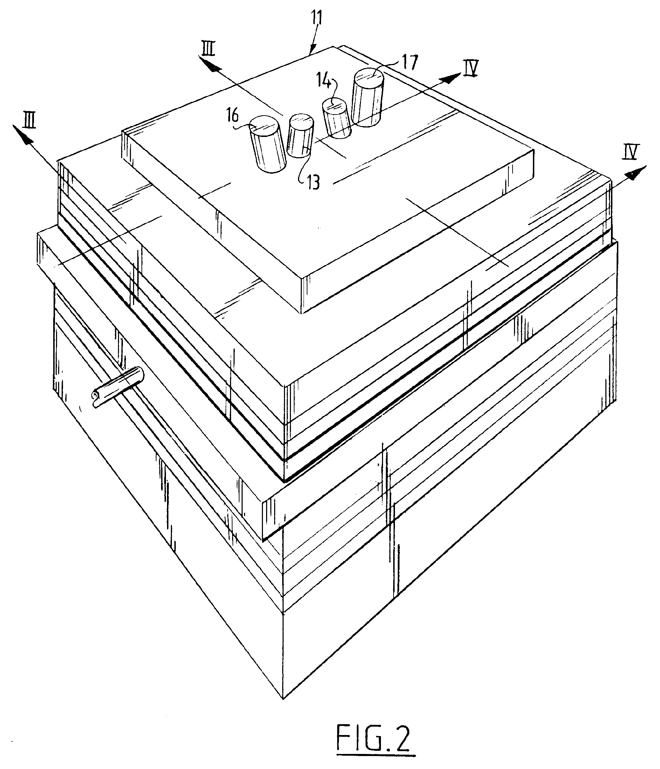

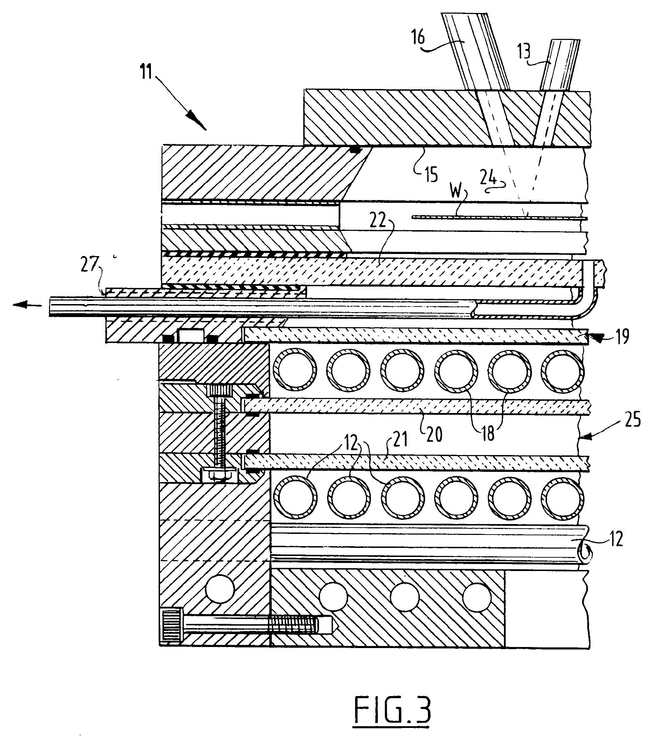

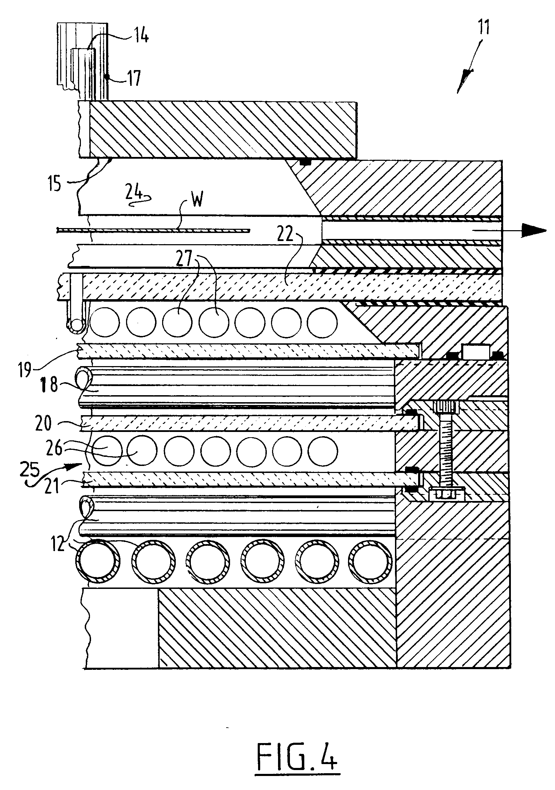

A preferred embodiment of a device 11 (fig. 2, 3, 4) according to the present invention relates to a device for rapid heating (Rapid Thermal Processing (RTP)) of silicon wafers, for example for 30 seconds at a temperature of 300-1200°C, using infrared lamps, bulb filaments or graphite elements. A (circular) wafer of semiconductor material W is heated on the underside by infrared lamps 12, while on the upper side one or more pyrometers 13, 14 are received into a reflecting wall 15 together with associated compensation lamps 16 and 17 respectively. For details and advantages of the reflecting wall and the heating on the underside of the wafer W reference is made to the patent application EP-B-0 381 253 of same applicant published 08/08/90

Two compensation lamps 18 are further disposed on the underside, provided with a window 19 roughened on at least one side for projecting diffuse light onto the underside of the wafer W. Arranged between the compensation lamps 18 and the infrared lamps 12 is a water-cooled window 25 comprising cooling water to be supplied via openings 26 as well as two plates 20, 21 allowing passage of radiation. The water-cooled window 25 serves to absorb radiation from infrared lamps 12 in the wavelength region of the pyrometers 13, 14. It also ensures that the wafer of material W does not heat up unnecessarily on the underside and radiates less radiation to the underside. The plates 20, 21 are further cooled by the water.

A window 22 is composed of quartz and is resistant to the forces occurring due to the vacuum which may be generated in the treatment chamber 24. The quartz window 22 can be further cooled with air by supply thereof through openings 27.

A first pyrometer is preferably suitable for measurements in a temperature range of 500-1200°C (λ= 1.5-1.8µm) and a second pyrometer suitable for a temperature range of 200-800°C (λ = 3.0-3.3µm). The associated compensation lamps for the relevant wavelength are preferably embodied as halogen lamps of relatively low power (100-200 Watt).

As preferred embodiment (not shown), a semi-reflecting mirror can be arranged between the compensation lamps and the wafer of semiconductor material, wherein the pyrometer also receives radiation via this semi-transparent mirror. This has the advantage that for each pyrometer only one opening needs to be arranged in the chamber. The semi-reflecting mirror is preferably a wafer of silicon material, optionally to be provided with a layer filtering the radiation according to wavelength.

When the pyrometers display sensitivity to radiation coming from the infrared lamps, these lamps are preferably equipped with filters for filtering this radiation.

The compensation radiation sources are preferably provided with a matt glass so that the intensity of the radiation is spread over a sufficiently large area.

In a manner not shown, the radiation is preferably made diffuse using a facetted mirror or lens preferably composed of aluminium and silicon dioxide, which may or may not be provided with quartz.

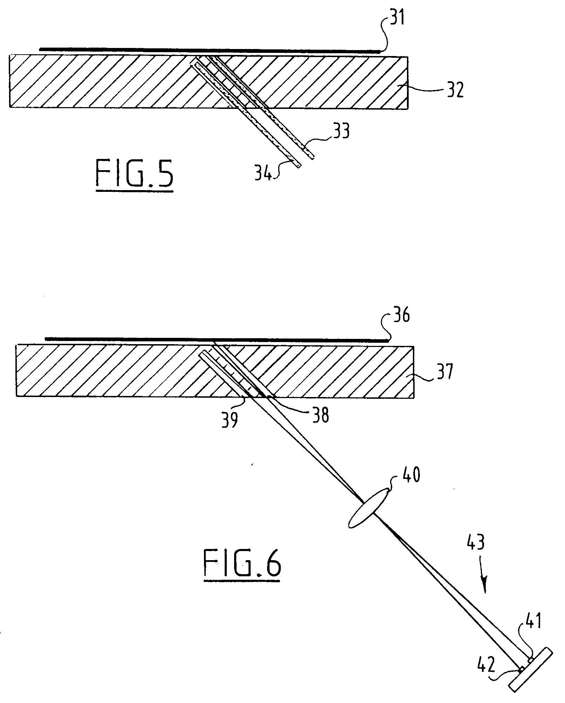

In a second preferred embodiment (fig.5) according to the present invention the temperature of a wafer of semiconductor material 31, which is heated by means of a holder 32 heated in a manner not shown here, is measured using an optic fibre 33 which is arranged through the holder 32 and connected in a manner not shown to a radiation meter the measurement value of which is compensated for the radiation coming from the holder 32 by means of a second optic fibre 34 which is arranged in a blind hole in the holder 32 and to which a radiation meter is likewise connected.

In a third preferred embodiment (fig.6) according to the present invention a wafer of semiconductor material 36 is heated by a holder 37 heated in a manner not shown here and provided with a through-opening 38 and a blind hole 39. The radiation coming from these openings is guided via a lens 40 to detectors 41 and 42 of the schematically designated pyrometer 43. By means of radiation coming from the blind hole 39 compensation is made for the temperature radiation from the holder 37. In both the second and the third preferred embodiment the holder or chuck serves as compensation radiation. A radiation with a wavelength around 1.0 µm is preferably employed so that measurement can be made in a temperature use range of 0-1200°C. At the said wavelength there occurs no transparency of the silicon wafer in the said temperature range.

The present invention is not limited to the above stated preferred embodiment for Rapid Thermal Processing; the method and device according to the invention are applicable in the semiconductor industry in installations for RTCVD, MBE, etc., or even in other applications, as may be apparent from the following claims.

## Claims

1. A method for measuring the radiation originating from one side of a wafer (W) of semiconductor material using a radiation thermometer or pyrometer (1,13,14,43), wherein the wafer is heated by heating means (12,32,37), characterized in that compensation radiation is projected onto the one side and/or the other side of the wafer to compensate for the reflectivity and/or the transparency of said wafer (W), and wherein the intensity of the compensation radiation is controlled subject to the amount of radiation measured by the pyrometer.

2. An apparatus (11) for treating a wafer (W) of semiconductor material, comprising:
- a treatment chamber wherein the wafer (W) is treated;
- heating means disposed in said treatment chamber and for heating said wafer; and
- one or more pyrometers or radiation thermometers for measuring radiation coming from said wafer, characterized in that said pyrometer is disposed into a wall of the treatment chamber and in that one or more compensation lamps are provided for projecting compensation radiation onto the wafer of semiconductor material, wherein the intensity of the compensation lamps is controlled subject to the measurement value of the pyrometer.

3. An apparatus according to claim 2, wherein the heating means comprise infrared lamps which are disposed on one side of the wafer of semiconductor material to be inserted and wherein the pyrometer and the compensation lamps are disposed on the other side of the wafer of semiconductor material.

4. An apparatus according to claim 2 or 3, wherein a matt glass or facetted mirror or lens is arranged in front of the compensation lamp in order to provide a diffuse bundle of compensation light.

5. An apparatus according to claims 2, 3 or 4, wherein a number of second compensation lamps are disposed on the side of the wafer remote from the pyrometer.

6. An apparatus according to claims 5, wherein between the second compensation lamps and the infrared lamp a water-cooled window is arranged.

## Patentansprüche

1. Verfahren zur Messung der Strahlung, die von einer Seite eines Wafers (W) aus Halbleitermaterial ausgeht, unter Verwendung eines Strahlungsthermometers oder Pyrometers (1, 13, 14, 43), wobei der Wafer durch Heizmittel (12, 32, 37) beheizt wird,
dadurch **gekennzeichnet,** daß Ausgleichsstrahlung auf die eine und/oder die andere Seite des Wafers projiziert wird, um das Reflexionsvermögen bzw. die Durchlässigkeit des Wafers (W) auszugleichen, und wobei die Intensität der Ausgleichsstrahlung in Abhängigkeit von der durch das Pyrometer gemessenen Strahlungsmenge gesteuert wird.

2. Vorrichtung (11) zur Behandlung eines Wafers (W) aus Halbleitermaterial, mit
- einer Behandlungskammer, in der der Wafer (W) behandelt wird;
- ein in der Kammer angeordnetes Heizmittel zur Beheizung des Wafers, und
- ein oder mehrere Pyrometer oder Strahlungsthermometer zur Messung der vom Wafer kommenden Strahlung,
dadurch **gekennzeichnet,** daß das Pyrometer in einer Wand der Behandlungskammer angeordnet ist und daß zur Projektion von Ausgleichsstrahlung auf den Wafer aus Halbleitermaterial eine oder mehrere Ausgleichslampen vorgesehen sind, wobei die Intensität der Ausgleichslampen in Abhängigkeit vom Meßwert des Pyrometers gesteuert wird.

3. Vorrichtung nach Anspruch 2,
bei der das Heizmittel Infrarotlampen umfaßt, die an einer Seite des einzusetzenden Wafers aus Halbleitermaterial angeordnet sind, und bei der das Pyrometer und die Ausgleichslampen auf der anderen Seite des Wafers aus Halbleitermaterial angeordnet sind.

4. Vorrichtung nach Anspruch 2 oder 3,
bei der ein mattes Glas oder ein Facettenspiegel oder eine Linse vor der Ausgleichslampe angeordnet ist, um ein diffuses Ausgleichslichtbündel zu schaffen.

5. Vorrichtung nach Anspruch 2, 3 oder 4,
bei der eine Anzahl von zweiten Ausgleichslampen auf der vom Pyrometer entfernten Seite des Wafers angeordnet sind.

6. Vorrichtung nach Anspruch 5,
bei der zwischen den zweiten Ausgleichslampen und der Infrarotlampe ein wassergekühltes Fenster angeordnet ist.

## Revendications

1. Procédé de mesure d'un rayonnement en provenance d'un côté d'une microplaquette (W) de matériau semiconducteur utilisant un thermomètre à rayonnement ou un pyromètre (1, 13, 14, 43), dans lequel la microplaquette est chauffée par un moyen de chauffage (12, 32, 37), caractérisé en ce que le rayonnement de compensation est projeté sur ledit côté et/ou sur l'autre côté de la microplaquette pour compenser la réflectivité et/ou la transparence de ladite microplaquette (W), et dans lequel l'intensité du rayonnement de compensation est commandée en fonction de la quantité de rayonnement mesurée par le pyromètre.

2. Appareil (11) pour traiter une microplaquette (W) de matériau semiconducteur, comprenant:
- une chambre de traitement dans laquelle la microplaquette (W) est traitée;
- un moyen de chauffage disposé dans ladite chambre de traitement pour chauffer ladite microplaquette; et
- un ou plusieurs pyromètres ou thermomètres à rayonnement pour mesurer le rayonnement en provenance de ladite microplaquette,
caractérisé en ce que ledit pyromètre est disposé dans une paroi de la chambre de traitement et en ce qu'une ou plusieurs lampes compensatrices sont utilisées pour projeter le rayonnement de compensation sur la microplaquette de matériau semiconducteur, de telle sorte que l'intensité des lampes compensatrices est commandée en fonction de la valeur de mesure du pyromètre.

3. Appareil selon la revendication 2, dans lequel le moyen de chauffage comporte des lampes à infrarouges qui sont disposées sur ledit côté de la microplaquette de matériau semiconducteur pour être insérées et dans lequel le pyromètre et les lampes compensatrices sont disposés sur l'autre côté de la microplaquette de matériau semiconducteur.

4. Appareil selon la revendication 2 ou 3, dans lequel un verre mat ou un miroir à facettes ou une lentille est disposé en regard de la lampe compensatrice afin d'obtenir un faisceau diffus de lumière de compensation.

5. Appareil selon les revendications 2, 3 ou 4, dans lequel un certain nombre de lampes compensatrices sont disposées sur le côté de la microplaquette éloigné du pyromètre.

6. Appareil selon la revendication 5, dans lequel entre les secondes lampes compensatrices et la lampe à infrarouges est disposée une fenêtre à refroidissement par eau.
